**Europäisches Patentamt**

**European Patent Office**

**Office européen des brevets**

(19)

(11) Veröffentlichungsnummer: **0 332 856 B1**

# EUROPÄISCHE PATENTSCHRIFT

(12)

(45) Veröffentlichungstag der Patentschrift:
14.08.91 Patentblatt 91/33

(51) Int. Cl.$^5$: **A01C 5/06**

(21) Anmeldenummer: **89102466.3**

(22) Anmeldetag: **14.02.89**

(54) Einscheibensäschar.

(30) Priorität: **17.03.88 DE 3808916**

(43) Veröffentlichungstag der Anmeldung:
**20.09.89 Patentblatt 89/38**

(45) Bekanntmachung des Hinweises auf die
Patenterteilung:
**14.08.91 Patentblatt 91/33**

(84) Benannte Vertragsstaaten:
**DE ES FR GB IT**

(56) Entgegenhaltungen:
**DE-A- 3 122 715**
**DE-U- 7 019 019**
**GB-A- 1 573 615**
**US-A- 1 838 476**

(73) Patentinhaber: **ACCORD Landmaschinen
Heinrich Weiste & Co. GmbH
Coesterweg 42
W-4770 Soest (DE)**

(72) Erfinder: **Weiste, Helmut, Dipl.-Ing.
Siegmund-Schultze-Weg 12
W-4770 Soest (DE)**

(74) Vertreter: **Habbel, Hans-Georg, Dipl.-Ing.
Postfach 3429 Am Kanonengraben 11
W-4400 Münster (DE)**

## Beschreibung

Die Erfindung bezieht sich auf ein Einscheibensäschar gemäß dem Oberbegriff des Patentanspruches 1.

Ein gattungsbildendes Einscheibensäschar ist in der DE-A-3418176 beschrieben. Bei dieser bekannten Anordnung ist die Scharkufe relativ klein ausgebildet und befindet sich unmittelbar vor der Saatgutaustrittsöffnung. In der Praxis konnte es vorkommen, daß sich hier vor der Scharkufe Erdreich aufbaute und verklumpte, so daß die von dem Einscheibensäschar und der Scharkufe gebildete Saatfurche sich ungewollt erweiterte und unregelmäßig wurde. Hierbei ist zu beachten, daß heute der Landwirt auch bei witterungsbedingten Bodenverhältnissen säen will und muß, während er in früheren Zeiten bei solchen Bodenverhältnissen noch nicht auf das Land gegangen wäre.

Es wird heute häufig auch auf Böden gesät, die mit Pflanzenrückständen in der Oberfläche durchmischt sind. Wenn dies dann schwere tonige Böden sind, bei denen die Pflanzenrückstände bei der Saat durch ein vorlaufendes Bodenbearbeitungsgerät eingemischt werden, ergeben sich Bedingungen, bei denen bisher bekannte Scheibenschare nicht mehr funktionsfähig sind. Die Säscheibe klebt mit einer 8-10 cm dicken Bodenschicht zu. Die üblichen beidseitigen Abstreifer können dann nur für eine kurze Zeit in ihrem Bereich die Säscheibe freikratzen. Dann verstopfen sie mit feinen Fasern der Pflanzenrückstände und mit Erdreich, so daß die Säscheibe sich kaum noch drehen kann. Erdklumpen und Pflanzenreste, die sich zwischen Scharkufe und Scheibe klemmen, bringen die Säscheibe dann ganz zum Stillstand und damit außer Funktion.

Aus dem DE-U-7019019 ist eine Maschine zum Verteilen von streubarem Material bekannt, bei welcher zwei Scheibenschare eingesetzt werden, wobei der Abstand der Scheibenschare die Reihenweite bestimmt. Den Scheibenscharen ist je ein Zuteilorgan für Saatgut zugeordnet. Die Scheibenschare sind schalenförmig geprägt und können bei evtl. im Boden befindlichen Stengelresten, Unkräutern, Pflanzenresten bei der Gründüngung usw. über evtl. Hindernisse hinwegrollen bzw. sie durchschneiden. Zwar sind die Zuteilorgane für das Saatgut auf das topfartige Innere der Säschare gerichtet, sie befinden sich aber in einem sehr großen Abstand von der Scharscheibe, so daß keine exakte Saatgutablage auf dem Furchengrund erfolgt und so daß weiterhin in diesem Bereich ein Verstopfen bei schwierigen Böden eintreten kann.

Der Erfindung liegt die Aufgabe zugrunde, das gattungsbildende Einscheibensäschar so zu verbessern, daß ein gutes Abführen des Erdreiches erreicht wird, so daß auch bei klebenden und klumpenden Böden eine einwandfreie Furche gezogen wird und der Rollwiderstand des Schars nicht unnötig erhöht wird.

Diese der Erfindung zugrundeliegende Aufgabe wird durch die Lehre des Hauptanspruches gelöst.

Vorteilhafte Ausgestaltungen sind in den Unteransprüchen erläutert.

Mit anderen Worten ausgedrückt, wird vorgeschlagen, daß das Einscheibensäschar nicht mehr ballig oder als flache Scheibe ausgebildet wird, sondern topfartig gestaltet wird, derart, daß ein Randstreifen zur Saatgutabgabeseite vorgezogen ist und daß die Grenzlinie zwischen der Scharkufe und der Scharscheibe in einem geschützten Raum liegt, so daß keine Verstopfungen in diesem Bereich auftreten können. Die Vorderkante der Scharkufe ist sehr weit nach oben hochgezogen. Die vorzugsweise ballig ausgebildete Scharkufe ist an ihrer Rückseite geschlossen und steht gegenüber der Ebene des Einscheibensäschars schräg, so daß sie von ihrer Vorderkante zur Rückseite hin einen sich gegenüber dem Einscheibensäschar erweiternden Raum schafft, in den das Saatgut in die Furche abgelegt wird, ohne daß es mit dem Einscheibensäschar in Berührung kommt. Hierbei dient die ballige Scharkufe gleichzeitig auch als Tiefenführung. Der zwischen Vorderkante der Scharkufe und dem Einscheibensäschar eintretende Boden kann dadurch problemlos nach hinten abfließen und außerdem wird durch die Hochstellung der Scharkufe eine flache Bauweise der Scharkufe bedingt, die ebenfalls zu einem guten Abgleiten des Bodens beiträgt.

Durch diese vorbeschriebene Maßnahme ist es nur noch erforderlich, auf der Außenseite der Säscheibe einen Abstreifer anzuordnen. Um ein zu großes Bremsmoment dieses einseitigen Abstreifers zu verhindern, wird erfindungsgemäß weiterhin vorgeschlagen, einen federnden Rundstab als Abstreifer einzusetzen, der in einem Abstand von 5 bis 20 mm von der Scheibe angeordnet ist. Es ergibt sich hier kein dauernder schleifender Kontakt mit der Scheibe, und dadurch wird ein geringeres Bremsmoment erzielt und weniger Verschleiß bedingt. Die sich bei klebrigen Böden aufbauende dünne Erdschicht zwischen Scheibe und Abstreifer erhöht dazu noch das Antriebsmoment der Säscheibe in losem Boden. Weiterhin wird vorgeschlagen, das freie Ende einer Schenkelfeder als Abstreifer zu verwenden, so daß in einfacher Weise durch Federung und Vibration des Stabes eine Reinigung der Scheibe von großen Anbackungen erzielt wird.

Ein Ausführungsbeispiel der Erfindung wird nachfolgend anhand der Zeichnungen erläutert. Die Zeichnungen zeigen dabei in

Fig. 1    eine erste Ausführungsform der erfindungsgemäßen Einrichtung und in

Fig. 2    eine abgeänderte Ausführungsform.

EP 0 332 856 B1

In den Zeichnungen ist mit 1 ein Einscheibensäschar bezeichnet, das über ein Drehlager 2 an einer Scharhalterung 3 angeordnet ist, wobei die Scharhalterung 3 gleichzeitig als Saatgutzuführungsrohr dient und im Bereich einer Saatgutaustrittsöffnung 4 mündet.

Das Einscheibensäschar 1 ist bei dem dargestellten Ausführungsbeispiel als flache Scheibe ausgebildet, die zur Saatgutabgabeseite hin einen vorgezogenen Randstreifen 10 besitzt, so daß zum mittleren Teil der Scheibe hin dadurch ein topfartiger Raum 11 geschaffen wird.

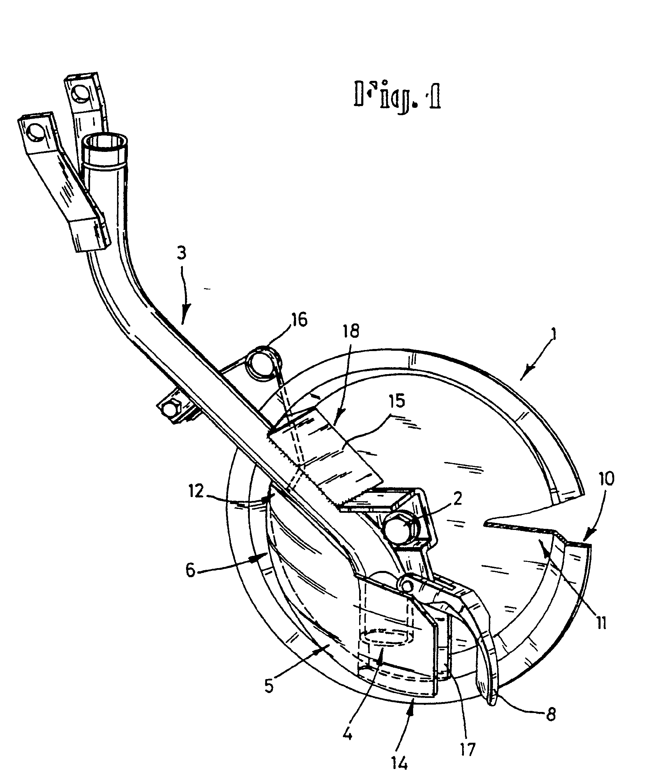

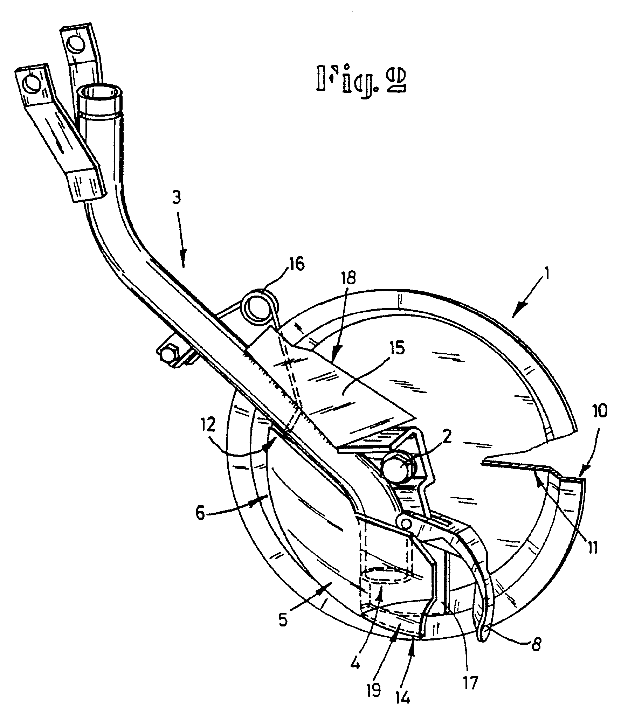

Die Saatgutaustrittsöffnung 4 mündet oberhalb des Randstreifens 10. Oberhalb des Randstreifens 10 ist gemäß Fig. 1 eine Scharkufe 5 vorgesehen, die ballig ausgebildet ist und deren Vorderkante 6 hinter der Stufe zwischen dem Randstreifen 10 und dem topfartigen Raum 11 liegt. An der Rückseite dieser Scharkufe 5 ist ein Führungsblech 17 vorgesehen, das den Innenraum der ballig ausgebildeten Scharkufe 5 verschließt und die Mündung der Scharhalterung 3 an der Rückseite umgibt, so daß Saatgut nicht an die umlaufende Scheibe spritzt und nach oben mitgenommen wird, während an der Vorderseite die Scharkufe 5 ebenfalls über das untere Ende der Scharhalterung 3 und die Saatgutaustrittsöffnung 4 nach hinten gezogen ist. Während die Scharkufe 5 mit ihrer Vorderkante 6 relativ dicht an dem Einscheibensäschar anliegt, endet die Rückseite des Führungsbleches 17 in einem größeren Abstand vom Einscheibensäschar 1, so daß zwischen dem Führungsblech 17 und dem Einscheibensäschar 1 ein sich von vorne nach hinten vergrößernder Raum geschaffen wird, der zu einer guten Abführung des zwischen Einscheibensäschar 1 und Vorderkante 6 der Scharkufe 5 eintretenden Bodens führt. Eine obere Kante 12 der Scharkufe 5 reicht bis nahe an die Ebene der Scharhalterung 3, während die untere Kante 14 der Scharkufe 5 unmittelbar oberhalb des Randstreifens 10 endet.

An der oberen Seite der Scharhalterung 3 ist ein Abweiserschild 15 vorgesehen, das sich bis zur Saatgutabgabeseite des Einscheibensäschars 1 erstreckt, wobei die freie Kante 18 des Abweiserschildes 15 in geringem Abstand von dem Einscheibensäschar 1 endet.

Bei 8 ist ein Stopfschutz an sich bekannter Bauart dargestellt.

Zusätzlich trägt die Scharhalterung 3 einen Federbügel 16, der an der Rückseite des Einscheibensäschars 1 in einem Abstand von 5 bis 20 mm wirksam ist und hier ein Abstreifen des ggf. sich anbackenden Bodens bewirkt.

Bei der in Fig. 2 dargestellten Ausführungsform ist der hintere Teil der ballig ausgebildeten Scharkufe 5 mit einem flügelartigen Ansatz 19 versehen, der strömungsgünstig ausgebildet ist. Durch diesen flügelartigen Ansatz 19 an der Scharkufe 5 wird gegenüber der sonst schmal ausgeformten Furche eine breitere Furche gebildet und somit das Saatgut in einem Band abgelegt, wodurch der einzelnen Pflanze ein besserer Standraum geboten wird. Der flügelartige Ansatz 19 ist so gestaltet, daß der Boden strömungsgünstig an der Scharkufe entlang geführt wird.

## Patentansprüche

1. Einscheibensäschar mit einer als Saatgutzuführungsrohr ausgebildeten Scharhalterung (3), an dem das gegenüber der Vertikalen um einen Winkel geneigte und in Fahrtrichtung um einen Winkel schräggestellte Einscheibensäschar (1) drehbar gelagert ist, wobei die Scharhalterung (3) lotrecht unterhalb des Drehlagers (2) des Einscheibensäschars (1) eine Saatgutaustritts-öffnung (4) aufweist, die durch eine mit ihrer Vorderkante (6) bis dicht an die Scheibenfläche des Einscheibensäschars (1) geführte, ballig ausgebildeten Scharkufe (5) abgedeckt ist, die bis in den unteren Bereich des Einscheibensäschars (1) reicht, dadurch gekennzeichnet, daß das Einscheibensäschar (1) in seinem Umfangsbereich zur Saatgutabgabeseite hin einen umlaufend stufenförmig vorgezogenen Randstreifen (10) aufweist und die Scharkufe (5) in dem gegenüber dem Randstreifen (10) zurückgesetzten topfartigen Raum (11) liegt und mit ihrer untersten Kante oberhalb des Randstreifens (10) endet.

2. Einscheibensäschar nach Anspruch 1, dadurch gekennzeichnet, daß die Scharkufe (5) innerhalb des topfartigen Raumes (11) mit ihrer oberen Kante (12) bis an die Scharhalterung (3) hochgezogen ist und sich — entgegen der Fahrtrichtung gesehen — von ihrer oberen schmalen Kante (12), die im wesentlichen vollständig hinter dem Randstreifen (10) liegt bis zu ihrer unteren Kante (14), die die Saatgutaustrittsöffnung (4) abdeckt, erweitert.

3. Einscheibensäschar nach Anspruch 1 oder 2, dadurch gekennzeichnet, daß die vordere Seite der Scharkufe (5) über die Saatgutaustritts-öffnung (4) der Scharhalterung (3) nach hinten verlängert ist und ein Führungsblech (17) an der Rückseite der Saatgutaustrittsöffnung (4) die Scharhalterung (3) umgibt und innerhalb des topfartigen Raumes (11) liegt.

4. Einscheibensäschar nach einem oder mehreren der vorhergehenden Ansprüche, dadurch gekennzeichnet, daß an der Saatgutabgabeseite des Einscheibensäschars (1) oberhalb des Drehlagers (2) an der Scharhalterung (3) ein Abweiserschild (15) angeordnet ist, das mit seiner freien Kante (18) nahe dem

3

Einscheibensäschar (1) endet.

5. Einscheibensäschar nach einem oder mehreren der vorhergehenden Ansprüche, dadurch gekennzeichnet, daß an der der Saatgutabgabeseite gegenüberliegenden Seite des Einscheibensäschars (1) an der Scharhalterung (3) ein Federbügel (16) als Abstreifer angeordnet ist.

6. Einscheibensäschar nach einem oder mehreren der vorhergehenden Ansprüche, dadurch gekennzeichnet, daß der Abstreifer als Schenkelfeder ausgebildet ist, deren freies Ende in einem Abstand von 5-20 mm von dem Einscheibensäschar (1) angeordnet ist.

7. Einscheibensäschar nach einem oder mehreren der vorhergehenden Ansprüche, dadurch gekennzeichnet, daß die ballig ausgebildete Scharkufe (5) an ihrer zur Saatgutabgabeseite hin gerichteten Rückseite geschlossen ist, mit ihrer Vorderkante (6) dicht an dem Einscheibensäschar (1) anliegt und der Raum zwischen dem Einscheibensäschar (1) und der Rückseite, z.B. dem Führungsblech (17) der Scharkufe (5) sich von der Vorderkante (6) bis zur Saatgutaustrittsöffnung (4) erweitert.

8. Einscheibensäschar nach einem oder mehreren der vorhergehenden Ansprüche, dadurch gekennzeichnet, daß der hintere Teil der ballig ausgebildeten Scharkufe (5) mit einem flügelartigen Ansatz (19) versehen ist, der strömungsgünstig ausgebildet eine breitere Furche bildet.


## Claims

1. A single disk sowing plough share, comprising a share holder (3) constructed as a seed supply tube, on which share holder (3) there is rotatably accommodated the single disk sowing share (1), which is inclined by an angle with respect to the vertical and sloping at an angle in the direction of travel, the share holder (3) comprising a seed outlet opening (4) perpendicularly below the pivot bearing (2) of the single disk sowing share (1), which outlet opening (4) is covered by a share runner (5) of cambered construction and having its front edge (6) close to the disk surface of the single disk sowing share (1), which share runner (5) extends as far as the lower region of the single disk sowing share (1), characterized in that the single disk sowing share (1) has an encircling step-form projecting edge strip (10) in its circumferential area towards the seed discharge side and in that the share runner (5) lies in the dish-shaped space (11) set back with the respect to the edge strip (10) and ends with its lowest edge above the edge strip (10).

2. A single disk sowing plough share according to claim 1, characterized in that the upper edge (12) of the share runner (5) is raised inside the dish-shaped space (11) as far as the share holder (3) and the share runner (5) extends, when viewed against the direction of travel, from its upper narrow edge (12), which lies substantially completely behind the edge strip (10), as far as its lower edge (14), which covers the seed outlet opening (4).

3. A single disk sowing plough share according to claim 1 or claim 2, characterized in that the front side of the share runner (5) is extended rearwards beyond the seed outlet opening in the share holder (3) and in that a metal guide plate (17) at the rear of the seed outlet opening (4) surrounds the share holder (3) and lies within the dish-shaped space (11).

4. A single disk sowing plough share according to one or more of the preceding claims, characterized in that a deflector shield (15) is arranged on the seed discharge side of the single disk sowing share (1) above the pivot bearing (2) on the share holder (3), which deflector shield (15) ends with its free edge (18) near the single disk sowing share (1).

5. A single disk sowing plough share according to one or more of the preceding claims, characterized in that a spring band (16) is arranged as a stripper on the share holder (3) on the side of the single disk sowing share opposite the seed discharge side.

6. A single disk sowing plough share according to one or more of the preceding claims, characterized in that the stripper is constructed as a leg spring whose free end is arranged at a distance of from 5 to 20 mm from the single disk sowing share (1).

7. A single disk sowing plough share according to one or more of the preceding claims, characterized in that the share runner (5) of cambered construction is closed at its rear directed towards the seed discharge side and lies with its front edge (6) tight against the single disk sowing share (1) and in that the space between the single disk sowing share (1) and the rear, e.g. the metal guide sheet (17), of the share runner (5) extends from the front edge (6) as far as the seed outlet opening (4).

8. A single disk sowing plough share according to one or more of the preceding claims, characterized in that the rear portion of the share runner (5) of cambered construction is provided with a blade-type projection (19), which is constructed to be favourable to flow and forms a wider furrow.

**Revendications**

1. Coutre de semoir monodisque comprenant un support de coutre (3) constitué par un tube d'amenée de la semence, sur lequel est monté rotatif le coutre de semoir monodisque (1), qui est incliné d'un certain angle par rapport à la verticale, et disposé en biais d'un certain angle dans le sens de la marche, le support de coutre (3) présentant, à la verticale au-dessous du palier (2) du coutre de semoir monodisque (1), une ouverture (4) de sortie de la semence qui est recouverte par un flasque de coutre (5), de configuration bombée, qui est prolongé par son bord avant (6) jusque contre la surface du disque de coutre de semoir monodisque (1), flasque qui se prolonge jusque dans la région inférieure du coutre de semoir monodisque (1), caractérisé en ce que le coutre de semoir monodisque (1) présente, dans sa région périphérique, en direction du côté d'épandage de la semence, une bordure (10) repoussée vers l'avant, sur tout le tour en formant un échelon, et le flasque de coutre (5) se trouve dans la cavité en forme de godet (11) qui est en retrait par rapport à la bordure (10), et se termine par son bord extrême inférieur au-dessus de la bordure (10).

2. Coutre de semoir monodisque selon la revendication 1, caractérisé en ce que le flasque de coutre (5) se prolonge vers le haut jusqu'au support du coutre (3) à l'intérieur de la cavité en forme de godet (11), par son bord supérieur (12), et, considéré en sens inverse de la marche, s'élargit à partir de son bord supérieur étroit (12), qui se trouve sensiblement entièrement en arrière de la bordure (10), jusqu'à son bord inférieur (14) qui recouvre l'ouverture (4) de sortie de la semence.

3. Coutre de semoir monodisque selon la revendication 1 ou 2, caractérisé en ce que le côté avant du flasque de coutre (5) se prolonge vers l'arrière au-delà de l'ouverture (4) de sortie de la semence du support de coutre (3) et en ce qu'une tôle de guidage (17), située le long du bord arrière de l'ouverture (4) de sortie de la semence, entoure le support de coutre (3) et se trouve à l'intérieur de la cavité en forme de godet (11).

4. Coutre de semoir monodisque selon une ou plusieurs des revendications précédentes, caractérisé en ce que, le long du côté d'épandage de la semence du coutre de semoir monodisque (1), est prévu, au-dessus du palier (2), sur le support de coutre (3), un écran déflecteur (15) qui se termine par son bord libre (18) à proximité du coutre de semoir monodisque (1).

5. Coutre de semoir monodisque selon une ou plusieurs des revendications précédentes, caractérisé en ce qu'un arceau élastique (16) servant de racleur est disposé sur le support de coutre (3) sur la face du coutre de semoir monodisque (1) qui est à l'opposé du côté d'épandage de la semence.

6. Coutre de semoir monodisque selon une ou plusieurs des revendications précédentes, caractérisé en ce que le racleur est constitué par un ressort à branches dont l'extrémité libre est disposée à une distance de 5 à 20 mm du coutre de semoir monodisque (1).

7. Coutre de semoir monodisque selon une ou plusieurs des revendications précédentes, caractérisé en ce que le flasque de coutre (5) de forme bombée est fermé, le long de son côté arrière dirigé vers le côté d'épandage de la semence, et est appliqué étroitement contre le coutre de semoir monodisque (1) par son bord avant (6), et que l'espace compris entre le coutre de semoir monodisque (1) et le côté arrière, par exemple la tôle de guidage (17) du flasque de coutre (5) s'élargit du bord avant (6) jusqu'à l'ouverture (4) de sortie de la semence.

8. Coutre de semoir monodisque selon une ou plusieurs des revendications précédentes, caractérisé en ce que la partie arrière du flasque de coutre (5), de configuration bombée, est munie d'un prolongement (19) en forme d'aile qui est d'une configuration favorisant l'écoulement, et qui forme un rayon plus large.

Fig. 1

Fig. 2